(19) Europäisches Patentamt

European Patent Office

Office européen des brevets

(11) EP 1 066 960 A2

(12) **EUROPÄISCHE PATENTANMELDUNG**

(43) Veröffentlichungstag:
10.01.2001 Patentblatt 2001/02

(51) Int. Cl.⁷: **B32B 27/36**, G11B 5/735

(21) Anmeldenummer: 00114245.4

(22) Anmeldetag: 03.07.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **05.07.1999 DE 19930981**

(71) Anmelder:
**Mitsubishi Polyester Film GmbH
65203 Wiesbaden (DE)**

(72) Erfinder:
• **Hellmann, Jörg
55131 Mainz (DE)**

• **Goerlitz, Wolfram
65193 Wiesbaden (DE)**
• **Pfeiffer, Herbert
55126 Mainz (DE)**
• **Czepl, Helmut
65817 Eppstein (DE)**
• **Stopp, Andreas
55218 Ingelheim (DE)**

(74) Vertreter:
**Schweitzer, Klaus, Dr.
Patentanwaltskanzlei Zounek,
Industriepark Kalle-Albert,
Rheingaustrasse 190-196
65203 Wiesbaden (DE)**

(54) **Mehrschichtige, biaxial orientierte Polyesterfolie, Verfahren zu ihrer Herstellung und ihre Verwendung als Magnetbandfolie ohne Rückseitenbeschichtung**

(57) Die Erfindung betrifft eine dreischichtige, biaxial orientierte Polyesterfolie, die bei sehr guten elektromagnetischen Eigenschaften gegenüber Folien aus dem Stand der Technik verbesserte Abriebeigenschaften aufweist. Die Folie ist beidseitig aufgebaut aus mindestens einer Basisschicht B und auf dieser Basisschicht aufgebrachten Deckschichten A und C, wobei diese Deckschichten eine definierte Anzahl von Erhebungen mit einer definierten Höhe aufweist sowie eine definierte Gasströmung im Rauhigkeitsprofil aufweist. Die Erfindung betrifft weiterhin ein Verfahren zur Herstellung der Folie und ihre Verwendung als Magnetbandfolie bei der keine Rückseitenbeschichtung aufgebracht wird.

EP 1 066 960 A2

Printed by Xerox (UK) Business Services
2.16.7 (HRS)/3.6

**Beschreibung**

Die Erfindung betrifft eine zumindest dreischichtige, biaxial orientierte Polyesterfolie, die bei Magnetbändern ohne Rückseitenbeschichtung deutlich verbesserte elektromagnetische Eigenschaften mit optimierten Abriebeigenschaften gegenüber Folien aus dem Stand der Technik aufweist und die aufgebaut ist aus mindestens einer Basisschicht B und beidseitig auf dieser Basisschicht aufgebrachten Deckschichten A und C, wobei diese Deckschichten durch $R_a$-Werte, $R_z$-Werte beschrieben werden und eine definierte Anzahl von Erhebungen mit einer definierten Höhe aufweisen, und weiterhin die Gasströmung im Rauhigkeitsprofil der Oberfläche aus Deckschicht C kontrolliert wird, was nur durch eine gezielte Mischung von Pigmentsystemen mit unterschiedlichen Partikeldurchmesser erreicht werden kann. Die spezifische Trübung der so erhaltenen Folie ist $\leq 0,4$ %/µm.

Die Erfindung betrifft weiterhin ein Verfahren zur Herstellung der Folie und ihre Verwendung, insbesondere als Magnetbandfolie ohne Rückseitenbeschichtung.

Polyesterfolien wurden schon seit langem, insbesondere aufgrund ihrer exzellenten mechanischen Eigenschaften, als Trägermaterial für magnetische Aufzeichnungsmaterialien verwendet. Ein optimales magnetisches Aufzeichnungsmedium mit guten elektromagnetischen Eigenschaften weist eine möglichst glatte Oberfläche auf. Für ein gutes Verarbeitungsverhalten während der Beschichtung und im späteren Gebrauch um ein gutes Abriebverhalten zu erreichen, sollte die Oberfläche auch eine gewisse Rauhigkeit aufweisen. Diese an sich widersprüchlichen Anforderungen können von Monofolien (einschichtigen Folien) nur mit einer gewissen Kompromissbereitschaft erfüllt werden, da bei diesen Folien die Optimierung der einen Eigenschaft immer zu Lasten der anderen Eigenschaft geht.

Es sind heute koextrudierte Mehrschichtfolien bekannt (Schichtaufbau = AB, ABA und ABA'), mit denen eine sogenannte "Dual-Surface"-Charakteristik erzeugt werden kann. Hierbei kann man den beiden Folienoberflächen in begrenztem Maße unterschiedliche Eigenschaften (Rauhigkeiten, Topographie) zuweisen.

So wird beispielsweise in der **EP-A-0 135 451** eine "Dual-Surface"-Folie vom Typ AB beschrieben, wobei die beiden Folienoberflächen unterschiedliche $R_a$-Werte aufweisen. Diese Folien haben jedoch den Nachteil, dass sie nicht wirtschaftlich hergestellt werden können, da beide Schichten - entsprechend zwei aufeinander liegenden Monofolien - mit Partikelsystemen ausgerüstet werden müssen und somit im Vergleich zu Monofolien keine Kostenersparung erlauben. Darüber hinaus wird das bei jedem kommerziellen Herstellungsprozess anfallende und (zwingend) wiederzuverwendende Folienregenerat (Recyclat), welches in mindestens einer Oberflächenschicht der AB-Folie eingearbeitet werden muß, die Qualität der Magnetbandfolie negativ beeinträchtigen.

Eine Verbesserung dieser Qualitätsproblematik wird in der **EP-A-0 609 060** und der **EP-A-0 663 286** durch das Prinzip der ABA-Koextrusion erreicht. Hier kann die Wirkung des Regenerats auf die Folienoberfläche durch den abschirmenden Effekt der beiden Deckschichten A reduziert werden, indem es gezielt in der B-Schicht eingesetzt wird. Eine ABA-Folie zeigt jedoch nach außen hin im allgemeinen die Eigenschaften einer Monofolie, d.h. der Vorteil der Schaffung von unterschiedlichen Oberflächeneigenschaften kann nicht genutzt werden. Die "Dual-Surface"-Charakteristik kann bei ABA-Folien jedoch bedingt eingestellt werden, durch eine gezielt Variation der Dicken der Deckschichten (A). Solche Folien werden dann üblicherweise als ABA'-Folien ($\neq$ A/B/C) bezeichnet. Nachteilig an diesen Folien ist aber die immer noch eingeschränkte Flexibilität in der Gestaltung der Oberflächentopographie der beiden Folienoberflächen.

Vereinzelt sind auch schon ABC- und ABCB-Folien hergestellt und beschrieben worden (**EP-A-0 502 745**), jedoch enthält hierbei wiederum mindestens eine Oberflächenschicht Regenerat - welches die oben beschriebenen Nachteile aufweist - oder aber die Hinweise auf ABC-Folien sind unspezifisch (**EP-A-0 347 646**).

Es wurde bereits vorgeschlagen (Aktenzeichen 198 14 710.5 der Deutschen Patentanmeldung), die Oberflächentopographien einer mindestens dreischichtigen Folie so einzustellen, dass deren Oberflächen durch Deckschichten A und C gebildet werden, wobei sich zwischen diesen Deckschichten eine Basisschicht B befindet, wobei die Deckschicht A einen $R_a$-Wert von $\leq 15$ nm, einen $R_z$-Wert von $\leq 150$ nm aufweist und eine Anzahl von Erhebungen/Vorsprüngen $N_a$ pro 0.36 mm$^2$ aufweist, die mit ihren jeweiligen Höhen $h_a$ in folgender Beziehung steht:

$$A_1 \cdot e^{-B_1 \cdot h_a} \leq N_a \leq A_2 \cdot e^{-B_2 \cdot h_a} \tag{1}$$

mit

$A_1 = 300, \qquad A_2 = 7000$
$B_1 = 7,0, \qquad B_2 = 8,0$
$0,01 \ \text{µm} \leq h_a \leq 1,0 \ \text{µm}$

und die Deckschicht C einen $R_a$-Wert aufweist, der größer ist als der, der Deckschicht A und eine Anzahl von Erhebungen/Vorsprüngen $N_a$ pro 0,36 mm$^2$ aufweist, die mit ihren jeweiligen Höhen $h_c$ in folgender Beziehung steht:

$$N_c \leq F \cdot e^{-G \cdot h_c} \tag{2}$$

mit F = 20.000 und G = 9,0
und wobei die spezifische Trübung $\leq 0,4$ %/µm ist.

Weiterhin wurde vorgeschlagen (DE-A-198 39 848.4), die Oberflächentopographien einer mindestens dreischichtigen Folie so einzustellen, dass deren Oberflächen durch Deckschichten A und C gebildet werden, wobei sich zwischen diesen Deckschichten eine Basisschicht B befindet, wobei die Deckschicht A einen Messwert für die Gasströmung im Rauhigkeitsprofil von > 1000 sec und > 2000 sec aufweist und die Deckschicht C einen Messwert von < 600 sec aufweist.

Folien mit Oberflächentopographien der Deckschicht C, die eine Anzahl von Erhebungen oder Vorsprüngen $N_a$ pro 0,36 mm$^2$ aufweist, die mit ihren jeweiligen Höhen $h_c$ in folgender Beziehung steht:

$$F_1 \cdot e^{-G_1 \cdot h_c} \leq N_a \leq F_2 \cdot e^{-G_2 \cdot h_c} \tag{3}$$

mit

$F_1 = 8000,$     $F_2 = 12000$
$G_1 = 8,0,$     $G_2 = 12,0$
$0,01 \ \mu m \leq h_c \leq 1,0 \ \mu m$

und zusätzlich Messwerte für die Gasströmung im Rauhigkeitsprofd auf der Oberfläche C von > 550 sec aufweist sind noch nicht beschrieben.

Aufgabe der vorliegenden Erfindung war es nun, eine koextrudierte, biaxial orientierte mehrschichtige Polyesterfolie zur Verfügung zu stellen, die sich als Trägermaterial für magnetische Aufzeichnungsmedien eignet und gleichzeitig eine glatte Oberfläche (für gute elektromagnetische Eigenschaften des Magnetbandes) und eine rauhere Oberfläche (für gutes Verarbeitungsverhalten bei schnelllaufenden Beschichtungsanlagen und gutes Laufverhalten im späteren Betrieb des Bandes) und einen niedrigen Abrieb aufweist. Weiterhin soll die rauhere Oberfläche (für gutes Verarbeitungsverhalten bei schnelllaufenden Beschichtungsanlagen und gutes Laufverhalten im späteren Betrieb des Bandes) durch einen geringen Transskriptionseffekt ausgezeichnet sein, der einen Einsatz bei Magnetbändern ohne Rückseitenbeschichtung ermöglicht.

Die Folie soll sich weiterhin wirtschaftlich (kostengünstig) herstellen lassen.

Diese Aufgabe wird erfüllt durch eine biaxial orientierte, koextrudierte, mindestens dreischichtige Polyesterfolie, deren beide Oberflächen durch Deckschichten A und C gebildet werden, wobei sich zwischen diesen Deckschichten eine Basisschicht B befindet, dadurch gekennzeichnet, dass die Deckschicht A einen $R_a$-Wert von $\leq 15$ nm, einen $R_z$-Wert von $\leq 150$ nm aufweist und eine Anzahl von Erhebungen $N_a$ pro 0,36 mm$^2$ aufweist, die mit ihren jeweiligen Höhen $h_a$ in folgender Beziehung steht:

$$A_1 \cdot e^{-B_1 \cdot h_a} \leq N_a \leq A_2 \cdot e^{-B_2 \cdot h_a} \tag{1}$$

mit

$A_1 = 300,$     $A_2 = 7000$
$B_1 = 7,0,$     $B_2 = 8,0$
$0,01 \ \mu m \leq h_a \leq 1,0 \ \mu m$

und die Deckschicht C einen $R_a$-Wert aufweist, der größer ist als der der Deckschicht A und eine Anzahl von Erhebungen $N_c$ pro 0,36 mm$^2$ aufweist, die mit ihren jeweiligen Höhen $h_c$ in folgender Beziehung steht:

$$F_1 \cdot e^{-G_1 \cdot h_c} \leq N_a \leq F_2 \cdot e^{-G_2 \cdot h_c} \tag{3}$$

mit

$F_1 = 8000,$    $F_2 = 12000$
$G_1 = 8{,}0,$    $G_2 = 12{,}0$
$0{,}01\ \mu m \leq h_c \leq 1{,}00\ \mu m$

und die Gesamtströmung im Rauhigkeitsprofil der Oberfläche aus Deckschicht C > 550 sec liegt,

und mindestens Partikelsysteme verwendet werden, die aus zwei unterschiedlichen Partikeldurchmessern ($d_{50}$) im Bereich von 0,3 bis 0,6 μm und einer Partikelkonzentration von 0,1 bis 1 Gew.-% zusammengesetzt werden,

und wobei die spezifische Trübung der so erhaltenen Folie ≤ 0,4 %/μm ist.

Unter Erhebungen/Vorsprünge im Sinne der vorliegenden Erfindung werde kegelige Erhebungen/Vorsprünge verstanden, die aus der planaren Folienoberfläche hervorragen.

Rauhigkeiten der die magnetische Beschichtung tragenden Deckschicht A von $R_a \leq 15$ nm und $R_z \leq 150$ nm sind für gute elektromagnetische Eigenschaften erforderlich. Darüber hinaus muß zur Erzielung der gewünschten elektromagnetischen Eigenschaften der Deckschicht A entsprechend der Gleichung (1) die Anzahl an Erhebungen/Vorsprüngen $N_a$ pro 0,36 mm$^2$ Folienoberfläche in dem in Gleichung (1) beschriebenen Bereich liegen. Dieser Bereich ist durch die Gleichung (1) für verschiedene Höhen der Erhebungen/Vorsprünge festgelegt.

Für die Erzielung von guten elektromagnetischen Eigenschaften der Deckschicht A ist eine definierte Dichte an Erhebungen/Vorsprüngen $N_a$ pro 0,36 mm$^2$ auf der magnetisch zu beschichtenden Folienoberfläche erforderlich. Ist die Dichte größer als der in Gleichung (1) für verschiedene Höhen $h_a$ beschriebene obere Grenzwert, so werden die elektromagnetischen Eigenschaften schlecht (z.B. das Signal/Noise-(S/N)-Verhältnis). Ist die Dichte kleiner als der in Gleichung (1) angegebene untere Grenzbereich, so treten Probleme bei der Beschichtung des Bandes auf.

Zur Erzielung eines guten Laufverhaltens und eines guten Abriebverhaltens ist eine rauhe Rückseite (Deckschicht C) erforderlich. Die Rauhheit dieser Deckschicht muß größer sein als die der Deckschicht A. Überraschenderweise zeigte sich für Magnetbänder ohne Rückseitenbeschichtung, dass - wenn die Anzahl der Erhebungen $N_c$/0,36 mm$^2$ der rauheren Rückseite in dem in Gleichung (3) beschriebenen Bereich liegen - die elektromagnetischen Eigenschaften der Magnetschicht verbessert werden konnten, ohne das gute Laufverhalten und Abriebverhalten der Rückseite zu beeinträchtigen. Dieser Bereich ist durch die Gleichung (3) für verschiedene Höhen der Erhebungen/Vorsprünge festgelegt.

Für die Erzielung eines guten Laufverhaltens und eines guten Abriebverhaltens und zur Vermeidung von Transskriptionseffekten der rauher Rückseite bei Magnetbändern ohne Rückseitenbeschichtung auf die glatte Magnetschicht (extrudiert auf Deckschicht A) im aufgewickelten Magnetband, was zur Verbesserung der elektromagnetischen Eigenschaften der Magnetschicht beiträgt, ist eine definierte Dichte an Erhebungen/Vorsprüngen $N_c$ pro 0,36 mm$^2$ auf der Rückseite (Deckschicht C) erforderlich. Ist die Dichte größer als der in Gleichung (3) für verschiedene Höhen $h_c$ beschriebene obere Grenzbereich, so wird das Laufverhalten und das Abriebverhalten der Rückseite schlechter. Ist die Dichte kleiner als der in Gleichung (3) für verschiedene Höhen $h_c$ beschriebene untere Grenzbereich, so werden die elektromagnetischen Eigenschaften durch den Transskriptionseffekt der rauheren Rückseite negativ beeinflusst (z.B. das S/N-Verhältnis).

Für die Erzielung eines guten Laufverhaltens und eines guten Abriebverhaltens und zur Vermeidung von Transskription der rauhen Rückseite bei Magnetbändern ohne Rückseitenbeschichtung auf die glatte Magnetschicht (extrudiert auf Deckschicht A) im aufgewickelten Magnetband, was zur Verbesserung der elektromagnetischen Eigenschaften der Magnetschicht beiträgt, ist ebenso die Optimierung der Folientopographie bezüglich der Gasströmung im Rauhigkeitsprofil erforderlich. Es hat sich gezeigt, dass Gasströmungen im Rauhigkeitsprofil von >550 sec für elektromagnetische Eigenschaften besonders geeignet sind, ohne dabei das Laufverhalten der Folie zu beeinträchtigen.

Liegen die Messwerte für die Gasströmung im Rauhigkeitsprofil unter der angegebenen Grenze, werden durch den Transskriptionseffekt die elektromagnetischen Eigenschaften deutlich verschlechtert.

Die für die Erzielung von guten Laufeigenschaften und guten Abriebverhalten notwendige Anzahl von Erhebungen $N_c$/0,36 mm$^2$ der rauheren Rückseite, die in dem in Gleichung (3) beschriebenen Bereich liegen muß, und die zur Vermeidung von Transkription der rauhen Rückseite bei Magnetbändern ohne Rückseitenbeschichtung auf die glatte Magnetschicht (extrudiert auf Deckschicht A) im aufgewickelten Magnetband, welches eindeutig zu einer Verbesserung der elektromagnetischen Eigenschaften führt, erforderliche Gasströmung im Rauhigkeitsprofil von > 550 sec kann nur durch die gezielte Verwendung von Pigmentsystemen mit mindestens zwei unterschiedlichen Partikeldurchmessern ($d_{50}$) im Bereich von 0,3 bis 0,6 μm in einer Partikelkonzentration von 0,05 bis 1 Gew.% erreicht werden.

Die geeignete Kombination der Partikeldurchmesser und Partikelkonzentrationen wird durch die notwendige Anzahl an Erhebungen $N_c$/0,36 mm$^2$ der rauheren Rückseite (Gleichung 3) in Kombination mit der Gasströmung im Rauhigkeitsprofil vorgegeben.

Als besonders zweckmäßig hat es sich erwiesen, wenn der Messwert für die Gasströmung im Rauhigkeitsprofil der Deckschicht C > 600 sec, insbesondere > 650 sec ist.

"Dual-Surface"-Folien vom AB-Typ müssen, bei vergleichbarer Funktion, mit einer erhöhten Menge an Partikeln hergestellt werden, was zwangsläufig mit einer Erhöhung der Trübung einhergeht. Erfindungsgemäße Folien mit mindestens ebensolcher Funktionalität können mit erheblich weniger Partikel hergestellt werden, was zu geringeren Produktionskosten und zu geringeren Trübungswerten führt. Der spezifische Trübungswert der erfindungsgemäßen Folie ist ≤ 0,4 %/µm, wobei die spezifische Trübung definiert ist als die Trübung der Folie gemäß der Norm ASTM-D 1003-61 dividiert durch die Gesamtdicke der gemessenen Folie in µm.

Als besonders zweckmäßig hat es sich erwiesen, wenn der $R_a$-Wert der Deckschicht A bevorzugt ≤ 13 nm, insbesondere ≤ 11 nm beträgt. Der $R_z$-Wert dieser Oberfläche ist bevorzugt ≤ 130 nm, besonders bevorzugt ≤ 100 nm. Die Topographie der Deckschicht A, ausgedrückt durch die Gleichung (1), ist bevorzugt, wenn $A_1$ = 500, insbesondere $A_1$ = 600 und/der $A_2$ bevorzugt = 6.000, insbesondere 5.000 und/oder $B_1$ bevorzugt = 6,8, insbesondere $B_1$ = 6,6 und/oder $B_2$ bevorzugt = 7,9, insbesondere $B_2$ = 7,8.

Die Deckschicht C besitzt bevorzugt eine Rauhigkeit $R_a$ ≤ 25 nm, insbesondere ≤ 20 nm, ganz besonders bevorzugt ≤ 18 nm, wobei die Bedingung, dass die Rauhigkeit $R_a$ der Deckschicht C immer größer ist als die der Deckschicht A, weiterhin erfüllt ist. Die Topographie der Deckschicht C, ausgedrückt durch die Gleichung (3), ist bevorzugt, wenn $F_1$ = 8500, insbesondere $F_1$ = 9000 und/oder $F_2$ bevorzugt = 11500, insbesondere 11000 und/oder $G_1$ bevorzugt = 8,5, insbesondere $G_1$ = 9,0 und/oder $G_2$ bevorzugt = 11,5, insbesondere $G_2$ = 11,0.

Bevorzugte spezifische Trübungen für die erfindungsgemäße Folien liegen bei ≤ 0,35 %/µm, insbesondere bei ≤ 0,30 %/µm.

In den bevorzugten und den besonders bevorzugten Ausführungsformen zeichnet sich die erfindungsgemäße Folie überraschenderweise durch verbesserte elektromagnetische Eigenschaften, bedingt durch ein geringeres Transskriptionsverhalten, aus.

Die erfindungsgemäße Folie enthält zur Erzielung der guten elektromagnetischen Eigenschaften sowie hoher Abriebfestigkeit und verbesserter (geringerer) Transskription durch den Partikel in den Deckschichten. Die Steuerung des Ausmaßes der Topographie im Rahmen der Gleichungen (1) und (3) geschieht zweckmäßigerweise durch Variation der Partikelkonzentration und/oder deren mittlerer Korngröße $d_{50}$. Zur Erreichung der Topographie der Deckschicht A nach Gleichung (1) haben sich Partikelkonzentrationen von 500 ppm bis 10.000 ppm, bevorzugt 800 ppm bis 8.000 ppm, insbesondere 1.000 ppm bis 6.000 ppm bei mittleren Korngrößen ($d_{50}$) von 0,1 µm bis 2,0 µm, bevorzugt 0,2 µm bis 1,5 µm, insbesondere 0,3 µm bis 1,0 µm, erwiesen.

Handelt es sich bei den eingesetzten Partikel um agglomerationsfähige Partikel wie $Al_2O_3$ oder $SiO_2$, so ist mit "mittlerer Korngröße" deren Sekundärkorngröße gemeint. Üblicherweise liegen die Primärkorngrößen solcher Partikel bei 1 bis 100 nm. Die eingesetzten Partikelsysteme können eine monomodale oder als Mischung von zwei oder mehreren Partikelsystemen auch eine bimodale oder multimodale Verteilung aufweisen, wobei im Falle der bimodalen Verteilung sich diese in ihren jeweiligen $d_{50}$-Werten unterscheiden. Bevorzugt werden Partikel mit einer engen Korngrößenverteilung eingesetzt.

Zur Erreichung der Topographien der Deckschicht C nach Gleichung (3) haben sich Partikelkonzentrationen von 1000 ppm bis 15000 ppm, bevorzugt 2000 ppm bis 12000 ppm, insbesondere 3000 ppm bis 10000 ppm erwiesen bei mittleren Korngrößen ($d_{50}$) von 0,1 µm bis 2,0 µm, bevorzugt 0,2 bis 1,8 µm, insbesondere 0,3 µm bis 1,5 µm, erwiesen. Handelt es sich bei den eingesetzten Pigmenten um agglomerationsfähige Partikel wie $Al_2O_3$ oder $SiO_2$, so ist mit "mittlerer Korngröße" deren Sekundärkorngröße gemeint. Üblicherweise liegen die Primärkorngrößen solcher Partikel bei 10 bis 100 nm. Die eingesetzten Partikelsysteme können eine monomodale oder als Mischung von zwei oder mehreren Partikelsystemen auch eine bimodale oder multimodale Verteilung aufweisen, wobei im Falle der bimodalen Verteilung sich diese in ihren jeweiligen $d_{50}$-Werten unterscheiden. Bevorzugt werden Partikel mit einer engen Korngrößenverteilung eingesetzt.

Erfindungsgemäß ist die Folie zumindest dreischichtig aufgebaut und weist auf der einen Seite der Schicht B (= Basisschicht) die Deckschicht A und auf der anderen Seite die Schicht B eine weitere Deckschicht C aus Polyethylenterephthalat auf. Beide Deckschichten enthalten die für die Erreichung der Topographien der Folie erforderlichen Partikel.

Für die Materialien der verschiedenen Schichten können prinzipiell verschiedene Rohstoffe verwendet werden. Es ist jedoch bevorzugt, die einzelnen Schichten auf Basis von Polyesterrohstoffen herzustellen.

Die Basisschicht B der Folie besteht bevorzugt zu mindestens 90 Gew.-% aus einem thermoplastischen Polyester. Dafür geeignet sind Polyester aus Ethylenglykol und Terephthalsäure (= Polyethylenterephthalat, PET), ans Ethylenglykol und Naphthalin-2,6-dicarbonsäure (= Polyethylen-2,6-naphthalat, PEN), aus 1,4-Bis-hydroximethylcyclohexan und Terephthalsäure (= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (oder der Schicht C) vorkommen können.

Geeignete andere aliphatische Diole sind beispielsweise Diethylenglykol, Triethylenglykol, aliphatische Glykole der allgemeinen Formen $HO(CH_2)_n$-OH, wobei n eine ganze Zahl von 3 bis 6 darstellt (insbesondere Propan-1,3-diol, Butan -1,4-diol, Pentan-1,5-diol und Hexan-1,6-diol) oder verzweigte aliphatische Glykole mit bis zu 6 Kohlenstoffatomen. Von den cycloaliphatischen Diolen sind Cyclohexandiole (insbesondere Cyclohexan-1,4-diol) zu nennen. Geeignete andere aromatische Diole entsprechend beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäure, Naphthalindicarbonsäuren (beispielsweise Naphthalin-1,4- oder 1,6-dicarbonsäure), Biphenyl-x.x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$ Alkandisäuren besonders, geeignet, wobei der Alkananteil geradkettig oder verzweigt sein kann.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Als vorteilhaft haben sich solche Verfahren erwiesen, bei denen Umesterungskatalysatoren eingesetzt werden, bei denen nur wenige und/oder nur kleine Erhebungen/Vorsprünge auf der Oberfläche der Folie erzeugt werden. Bevorzugt sind hierbei insbesondere Magnesium- und Mangan-Salze. Diese Umesterungskatalysatoren werden vorteilhaft bei der Herstellung des Basisrohstoffes, besonders vorteilhaft aber bei der Herstellung des Rohstoffes für die Deckschichten verwendet.

Für die Deckschichten können prinzipiell diegleichen Polymere verwendet werden, wie für die Basisschicht. Daneben können in den Deckschichten auch andere Materialien enthalten sein, wobei dann die Deckschichten bevorzugt aus einem Gemisch von Polymeren, einem Copolymeren oder einem Homopolymeren besteht, welches Ethylen-2,6-naphthalat-Einheiten und Ethylen-terephthalat-Einheiten enthalten. Bis zu 10 Mol-% der Polymere können aus weiteren Comonomeren (s.o.) bestehen.

Für eventuell vorhandene Zwischenschichten können prinzipiell die gleichen Polymere verwendet werden, wie zuvor für die Basisschicht und die Deckschichten beschrieben.

Die Basisschicht und die anderen Schichten können zusätzlich übliche Additive, wie beispielsweise Stabilisatoren und/oder Antiblockmittel, enthalten. Sie werden zweckmäßig dem Polymer beziehungsweise der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Partikel bezeichnet), sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäure, Ruß, Titandioxid, Kaolin oder vernetzte Polystyrol- oder Acrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den jeweils vorteilhaften Konzentrationen, z.B. über Masterbatche bei der Extrusion zugegeben werden. Als besonders geeignet haben sich Pigmentkonzentrationen von 0,1 bis 5 Gew.-% erwiesen. Eine detaillierte Beschreibung der einsetzbaren Antiblockmittel findet sich beispielsweise in der **EP-A-0 602 964**.

Die Basisschicht der erfindungsgemäßen Folie ist im wesentlichen ohne Partikel, kann jedoch durch das Einbringen von Regenerat (= wiederverwertbare Folienreste) Pigmente in kontrollierter Menge enthalten, wobei diese Menge so gewählt wird, dass sie sich nicht negativ auf die Anzahl der Erhebungen/Vorsprünge der Deckschichten auswirkt.

Die erfindungsgemäße Polyesterfolie ist mindestens dreischichtig aufgebaut und enthält die beiden Deckschichten A und C. Dicke und Zusammensetzung der zweiten Deckschicht C können unabhängig von der Deckschicht A gewählt werden, wobei die zweite Deckschicht ebenfalls die bereits genannten Polymere oder Polymermischungen enthalten kann, welche aber nicht mit der ersten Deckschicht identisch sein müssen. Die zweite Deckschicht kann auch andere gängige Deckschichtpolymere enthalten. Bevorzugt sind beide Deckschichten gleich dick. Der Vorteil der erfindungsgemäßen Folie liegt gerade darin, dass sich die unterschiedlichen Deckschichttopographien durch gezielte Variation der Partikelkonzentration und/oder der Partikelkorngröße bei im wesentlichen gleicher Deckschichtdicke einstellen lassen.

Zwischen der Basisschicht und den Deckschichten kann sich gegebenenfalls noch eine Zwischenschicht befinden. Diese kann wiederum aus den für die Basisschicht beschriebenen Polymeren bestehen. In einer besonders bevorzugten Ausführungsform besteht sie aus dem für die Basisschicht verwendeten Polyester. Sie kann auch die für die Deckschichten beschriebenen Additive enthalten. Die Dicke der Zwischenschicht ist im allgemeinen in der Größenordnung der Deckschichtendicken.

Bei der dreischichtigen erfindungsgemäßen Folie sind die Dicken der Deckschichten A und C im allgemeinen größer als 0,2 μm und liegen im Bereich von 0,3 bis 2,5 μm, bevorzugt im Bereich von 0,5 bis 2,0 μm, besonders bevorzugt im Bereich von 0,7 bis 1,8 μm, wobei die Deckschichten A und C gleich oder verschieden dick sein können. Bevorzugt sind sie im wesentlichen gleich dick.

Die Gesamtdicke der erfindungsgemäßen Polyesterfolie kann innerhalb weiter Grenzen variieren. Sie beträgt 5 bis 40 μm, insbesondere 7 bis 20 μm, vorzugsweise 9 bis 15 μm.

Zur Herstellung der Schichten A und C (Deckschichten A und C) werden Granulate aus Polyethylenterephthalat jeweils einem Extruder zugeführt. Die Materialien werden bei etwa 300 °C aufgeschmolzen und extrudiert.

Die Polymere für die Basisschicht werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Verstreckung wird im allgemeinen sequentiell durchgeführt. Dabei wird vorzugsweise erst in Längsrichtung (d.h. in Maschinenrichtung) und anschließend in Querrichtung (d.h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufender Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den geforderten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1.

Vor der Querstreckung kann man eine oder beide Oberfläche(n) der Folie nach den bekannten Verfahren inline beschichten. Die In-line-Beschichtung kann beispielsweise zu einer verbesserten Haftung der magnetisierbaren Schicht, aber auch zur Verbesserung des antistatischen Verhaltens oder des Verarbeitungsverhaltens dienen.

Bei der nachfolgenden Thermofixierung wird die Folie etwa 0,1 bis 10 sec lang bei einer Temperatur von 150 bis 250 °C gehalten. Anschließend wird die Folie in üblicher Weise aufgewickelt.

Die biaxial verstreckte und thermofixierte Polyesterfolie kann vor dem Aufbringen der magnetisierbaren Schicht auf einer oder beiden Seite(n) corona- oder flammbehandelt werden. Die Behandlungsintensität ist so gewählt, dass die Oberflächenspannung der Folie im allgemeinen über 45 mN/m liegt.

Sofern gewünscht, erfolgt das Aufbringen von magnetisierbaren Schichten auf üblichen industriellen Anlagen.

Ein Vorteil der Erfindung besteht darin, dass die Herstellungskosten der erfindungsgemäßen Folie geringer sind als diejenigen nach dem Stand der Technik. Die verarbeitungs- und gebrauchsrelevanten Eigenschaften der erfindungsgemäßen Folie sind auf die gewünschten Eigenschaften maßgeschneidert. Die bei der Herstellung der Folie anfallenden Folienabfälle werden als Regenerat, ohne Einbuße in der Qualität, wiederverwendet.

Die Folie eignet sich hervorragend als Trägerfolie für Magnetbänder ohne Rückseitenbeschichtung.

Zusammengefasst zeichnet sich die erfindungsgemäße Folie durch gute elektromagnetische Eigenschaften bei hoher Abriebfestigkeit und einem verbesserten und vernachlässigbaren Transskriptionsverhalten aus. Des weiteren zeichnet sich die Folie durch hohe Antistatikeigenschaften aus. Außerdem besitzt sie das gewünschte gute Verarbeitungsverhalten, insbesondere hervorragende Schneidbarkeit und Wickeleigenschaften.

Die nachstehende Tabelle (Tabelle 1) fasst die wichtigsten erfindungsgemäßen Folieneigenschaften noch einmal zusammen.

Tabelle 1

| | Erfindungsgemäßer Bereich | bevorzugt | insbesondere | Einheit | Messmethode |
|---|---|---|---|---|---|
| $R_a(A)$, | ≤ 15 | ≤ 13 | ≤ 11 | nm | DIN 4768 |
| $R_z(A)$ | 150 | ≤ 130 | ≤ 110 | | DIN 4762 |
| $A_1 / A_2$ | 300 / 7000 | 500 / 6000 | 800 / 5000 | $N_a / 0,36\ mm^2$ | |
| $B_1 / B_2$ | 7,0 / 8,0 | 6,8 / 7,9 | 6,6 / 7,8 | | |

Tabelle 1 (fortgesetzt)

| | Erfindungsgemä-ßer Bereich | bevorzugt | insbesondere | Einheit | Messmethode |
|---|---|---|---|---|---|
| $R_a(C)$ | < 25 | < 20 | < 18 | | DIN 4768 |
| $F_1 / F_2$ | 8000 / 12000 | 8500 / 11500 | 9000 / 11000 | $N_c$ / 0,36 mm$^2$ | |
| $G_1 / G_2$ | 8,0 / 12,0 | 8,5 / 11,5 | 9,0 / 11,0 | | |
| Messwert der Gas-strömung (Deck-schicht C) | > 550 | > 600 | >650 | sec | wie beschrieben |
| spez. Trübung | 0,4 | 0,35 | 0,3 | % / μm | ASTM-D 1003-61 |

Zur Charakterisierung der Rohstoffe und der Folien wurden die folgenden Methoden benutzt:

**Bestimmung der Rauhigkeit**

Die Rauhigkeit $R_a$ der Folie wurde nach DIN 4762 bei einem Cut-off von 0,08 mm bestimmt.

Gerät: Perthometer S8P (Fa. Mahr Feinprüf) auf Glasplatte
Taster : RFHTB-50 mit Kufe
Nadeldurchmesser : 5 μm
Auflagekraft : 0,4 mN
Abstandskufe : -25 mm

**Bestimmung der spezifischen Trübung**

Die Trübung der Folie wurde nach ASTM-D 1003-61 (Messmethode A) mit dem Messgerät XL-211 Hazemeter der Firma BYK Gardner bestimmt. Die spezifische Trübung ist definiert als:

$$\text{spez. Trübung} = \frac{\text{Trübung}}{\text{Gesamtschichtdicke}} \cdot \frac{\%}{\mu m}$$

**Bestimmung der Anzahl von Erhebungen auf Folienoberflächen durch Schattentopographie**

Die Bestimmung der Größenverteilung von Erhebungen auf Folienoberflächen erfolgt mit einem Rasterelektronenmikroskop und einem Bildanalysesystem. Verwendet wird das Rasterelektronenmikroskop XL30 CP der Fa. Philips mit einem integrierten Bildanalyseprogramm AnalySIS der Fa. Soft-Imaging System.
Für diese Messungen werden Folienproben flach auf einen Probenhalter aufgebracht. Anschießend werden diese unter einem Winkel α mit einer dünnen Metallschicht (z.B. aus Silber) schräg bedampft. Dabei ist α der Winkel zwischen Probenoberfläche und der Ausarbeitungsrichtung des Metalldampfes. Durch diese Schrägbedampfung entsteht hinter der Erhebung ein Schattenwurf. Da die Schatten noch nicht elektrisch leitfähig sind, wird die Probe anschließend noch mit einem zweiten Metall (z.B Gold) bedampft oder gesputtert, wobei die zweite Beschichtung senkrecht auf die Probenoberfläche auftrifft und somit bei der zweiten Beschichtung keine Schatten entstehen.
Die so präparierten Probenoberflächen werden in einem Rasterelektronenmikroskop (REM) abgebildet. Die Schatten der Erhebungen sind infolge des Materialkontrastes der Metalle sichtbar. Die Probe wird im REM so orientiert, dass die Schatten parallel zu einem Bildrand verlaufen. Für die Bildaufnahme werden folgende Bedingungen am REM eingestellt: Sekundärelektronendetektor, Arbeitsabstand 10 mm, Beschleunigungsspannung 10 kV und Spot 4,5. Die Helligkeit und der Kontrast werden so eingestellt, dass sämtliche Bildinformationen als Grauwerte dargestellt werden und die Intensität des Grundrauschens so klein ist, dass er nicht als Schatten detektiert wird. Die Länge der Schatten wird mit dem Bildanalyse ausgemessen. Der Schwellwert für die Schattenerkennung wird auf die Stelle gelegt, wo die 2. Abbildung der Grauwertverteilung des Bildes den Nullpunkt durchquert. Vor der Schattenerkennung wird das Bild mit einem NxN-Filter (Größe 3, 1 Iteration) geglättet. Durch die Setzung eines Rahmens ("frame") wird sichergestellt, daß Erhebungen, die im Bild nicht vollständig abgebildet werden, nicht mitgemessen werden. Die Vergrößerung der Rahmengröße und die Anzahl der ausgewerteten Bilder werden so gewählt, daß insgesamt 0,36 mm$^2$ Folienoberfläche ausgewertet werden.

Die Höhe der einzelnen Erhebungen wird aus den einzelnen Schattenlängen mit folgender Beziehung errechnet:

$$h = (\tan \alpha) \cdot L \qquad (4)$$

wobei h die Höhe der Erhebung, $\alpha$ der Bedampfungswinkel und L die Schattenlänge ist. Die so ermittelten Erhebungen werden in Klassen eingeteilt, um zu einer Häufigkeitsverteilung zu kommen. Die Einteilung erfolgt in 0,05 $\mu$m breite Klassen zwischen 0 und 1 $\mu$m, wobei die kleinste Klasse (0 bis 0,05 $\mu$m) für weitere Auswertungen nicht verwendet wird.

## Bestimmung der elektromagnetischen Eigenschaften (EMP)

Die elektromagnetischen Eigenschaften wurden nach DIN IEC 60 B (CO) 69 bestimmt Es wurde jeweils die Außenseite (Koex-A) der Folien nach den bekannten Verfahren magnetisch beschichtet, kalandriert und für die Bestimmung der elektromagnetischen Eigenschaften ausgewertet. Die Stärke der Magnetschicht beträgt typischerweise 2,0 bis 2,8 $\mu$m. Es wurde keine Rückseitenbeschichtung aufgebracht.

## Abriebfestigkeit

Die Abriebfestigkeit wurde mit einer umgebauten Tonbandmaschine ermittelt. Die Ausstattung des Gerätes beinhaltet zwei Messgeräte (2 und 3) zur Kontrolle der Bandspannung und einen Pin (1), über den eine Seite der Oberfläche der Folie bei einer definierten Geschwindigkeit und einem definierten Winkel ($\theta$) gezogen wird. Der an dem Pin erzeugte Abrieb wird mittels optischer und mikroskopischer Methoden klassifiziert. (- = viel Abrieb, 0 = Abrieb vergleichbar zu Standard, + = besser als Standard, ++ = wenig Abrieb).

Zur Beurteilung der Abriebfestigkeit wurden entsprechende Schmalschnitte von 1 cm Breite und 200 Meter Länge präpariert. Die Bestimmung der Abriebfestigkeit erfolgte jeweils nur auf der Folienseite, die später als Rückseite des Magnetbandes verwendet wurde.

```
Bandgeschwindigkeit  : 19 cm/sec
Bandspannung         : 200 g
Kontaktwinkel        : 135
Pin                  ; SUS 204 2S, 6 mm, CrO2 Oberfläche
```

## Oberflächengasströmungszeit

Das Prinzip des Messverfahrens basiert auf der Luftströmung zwischen einer Folienseite und einer glatten Silizium-Wafer-Platte. Die Luft strömt von der Umgebung einen evakuierten Raum, wobei die Grenzfläche zwischen Folie und Silizium-Wafer-Platte als Strömungswiderstand wirkt.

Eine runde Folienprobe wird auf einer Silizium-Wafer-Platte, in deren Mitte eine Bohrung die Verbindung zu dem Rezipienten gewährleistet, gelegt. Ein Anpressgewicht wird auf die Probe plaziert. Der Rezipient wird auf einen Druck kleiner 0,1 mbar evakuiert. Bestimmt wird die Zeit (sec), die die Luft benötigt, um in dem Rezipienten einen Druckanstieg von 56 mbar zu bewirken.

Messbedingungen:

```
Messfläche           : 45,1 cm^2
Anpressgewicht       : 1276 g
Lufttemperatur       : 23 °C
Luftfeuchte          : 50 % rel. Feuchte
Luftdruck            : 1 bar
Gassammelvolumen     : 1,2 cm^3
Druckintervall       : 56 mbar
```

## Beispiele 1 und 2

Chips aus Polyethylenterephthalat (hergestellt über das Umesterungsverfahren mit Mn als Umesterungskatalysator, Mn-Konzentration: 100 ppm) und arteigenes Recyclat mit einer "Geamt"-Partikelkonzentration von 1150 ppm ($CaCO_3$ < 1,0 µm; $Al_2O_3$ 0,06 µm) wurden bei 135 °C auf eine Restfeuchte von unterhalb 50 ppm getrocknet und dem Extruder für die Basisschicht B zugeführt.

Daneben wurden Mischungen von Chips aus Polyethylenterephthalat (hergestellt über das Umesterungsverfahren mit Mn als Umesterungskatalysator, Mn-Konzentrationen: 100 ppm), die entsprechend Tabelle 2 Partikel enthalten, ungetrocknet den jeweiligen Doppelschneckenextrudern für die Deckschichten A und C zugeführt.

Es wurde durch Koextrusion und anschließende stufenweise Orientierung in Längs. und Querrichtung eine transparente dreischichtige A/B/C- mit einer Gesamtdicke von 15 (13) µm hergestellt. Die Dicke der jeweiligen Deckschichten wurde über den Durchsatz der Koextruder geregelt und zu je 1 µm eingestellt.

Basisschicht B:

50,0 Gew.-%    Polyethylenterephthalat mit einem SV-Wert von 770
50,0 Gew.-%    Recyclat mit einem SV-Wert von 730

Die Herstellungsbedingungen in den einzelnen Verfahrensschritten waren:

| Extrusion: | Temperaturen: | A-Schicht: | 290 °C |
|---|---|---|---|
| | | B-Schicht: | 290 °C |
| | | C-Schicht: | 290 °C |
| Längsstreckung: | Temperatur: | | 80 - 125 °C |
| | Längsstreckverhältnis: | | 4,7 |
| Querstreckung: | Temperatur: | | 80 - 135 °C |
| | Querstreckverhältnis: | | 4,0 |
| Fixierung: | Temperatur: | | 210 -225°C |

**Vergleichsbeispiele 1 bis 4**

Für die Vergleichsbeispiele 1 bis 4 wurde gemäß der technischen Beschreibung zu den Beispielen 1 und 2 vorgegangen. Die Pigmentierung der Deckschichten ist in Tabelle 3 dargestellt.

Tabelle 2

| Beispiel | Coextrusion A | | | Coextrusion C | | | Rauhigkeit | |
|---|---|---|---|---|---|---|---|---|
| | $CaCO_3$ | | $Al_2O_3$ $d_{50}$=0,06 µm | $CaCO_3$ | | $Al_2O_3$ $d_{50}$=0,06 µm | $R_a/R_z$ A (außen) | $R_a/R_z$ C (innen) |
| | $d_{50}$ [µm] | % | % | $d_{50}$ [µm] | % | % | [nm] | [nm] |
| 1 | 0,6 | 0,2 | ./. | 0,4 | 0,3 | 0,3 | 7/56 | 11/78 |
| | | | | 0,6 | 0,3 | | | |
| 2 | 0,6 | 0,2 | ./. | 0,4 | 0,35 | 0,3 | 7/55 | 12/89 |
| | | | | 0,6 | 0,25 | | | |
| Beispiele 1 und 2, ABC (Schichtdicke A=C=1 µm, B=13 µm) Prozentangaben erfolgen in Gew.-%. | | | | | | | | |

Tabelle 3

| Vergleichsbeispiel | Coextrusion A | | | Coextrusion C | | | Rauhigkeit | |
|---|---|---|---|---|---|---|---|---|
| | CaCO₃ | | Al₂O₃ d₅₀=0,06 μm | CaCO₃ | | Al₂O₃ d₅₀=0,06 μm | R_a/R_z A (außen) | R_a/R_z C (innen) |
| | d₅₀ [μm] | % | % | d₅₀ [μm] | % | % | [nm] | [nm] |
| 1 | 0,6 | 0,2 | ./. | 0,4 0,8 | 0,55 0,3 | 0,3 | 7/57 | 12/78 |
| 2 | 0,6 | 0,45 | ./. | 0,4 0,7 | 0,5 0,4 | 0,45 | 12/81 | 13/89 |
| 3 | 0,6 | 0,45 | ./. | 0,4 0,7 | 0,5 0,1 | 0,45 | 11/72 | 11/94 |
| 4 | 0,6 | 0,2 | ./. | 0,4 0,7 | 0,5 0,4 | 0,45 | 7/55 | 13/87 |
| Vergleichsbeispiele 1 bis 4, ABC (Schichtdicke A=C=1 μm, B = 13 μm) Prozentangaben erfolgen in Gew.-% | | | | | | | | |



Tabelle 4 zeigt eindeutig, dass Folien, deren Topografie im erfindungsgemäßen Bereich liegen (Beispiel 1), bessere und (Beispiel 2), hervorragende elektromagnetische Eigenschaften (EMP) verbunden mit guten Abriebfestigkeiten aufweisen. Vor allem die Variation in den Parametern F und G der C-Schicht und der Messwert der Gasströmung im Rauhigkeitsprofil für die C-Schichten zeigen, wie diese sich auf die elektromagnetischen Eigenschaften auswirken. In den erfindungsgemäßen Beispielen konnten die EMP gegenüber dem Standard (Vergleichsbeispiel 1-4) um bis zu 0,5 - 1 dB verbessert werden.

Tabelle 4

| Beispiel | Ra (A) (nm) | Ra (C) (nm) | Spez. Trübung | A | B | F | G | Air-flow A/C | EMP | Abriebfestigkeit |
|---|---|---|---|---|---|---|---|---|---|---|
| 1 | 7 | 11 | 0,2 | 2050 | -7,4 | 10533 | -9,7 | 930/690 | ++ | + |
| 2 | 7 | 12 | 0,2 | 1900 | -7,1 | 11598 | -10,8 | 930/720 | ++ | + |
| - schlecht + gut ++ sehr gut | | | | | | | | | | |

Tabelle 5

| Beispiel | Ra (A) (nm) | Ra (C) (nm) | Spez. Trübung | A | B | F | G | Air-flow A/C | EMP | Abriebfestigkeit |
|---|---|---|---|---|---|---|---|---|---|---|
| 1 | 7 | 12 | 0,2 | 2050 | -7,4 | 14176 | -10,9 | 930/570 | 0 | 0 |
| 2 | 12 | 13 | 0,3 | 4540 | -8,1 | 10125 | -9,0 | 610/480 | 0 | ++ |
| 3 | 11 | 11 | 0,3 | 4550 | -8,0 | 14472 | -11,7 | 610/730 | 0 | + |

Tabelle 5 (fortgesetzt)

| Beispiel | Ra (A) (nm) | Ra (C) (nm) | Spez. Trübung | A | B | F | G | Air-flow A/C | EMP | Abriebfe- stigkeit |
|---|---|---|---|---|---|---|---|---|---|---|
| 4 | 7 | 13 | 0,3 | 2000 | -7,5 | 10125 | -9,0 | 930/480 | 0 | + |

- schlecht
0 standard
+ gut
++ sehr gut

Tabelle 5 zeigt, dass Folien gemäß Stand der Technik (ABC) nicht die gestellten Aufgaben, verbesserte elektromagnetische Eigenschaften für Magnetbänder ohne Rückseitenbeschichtung, lösen.

Vergleichsbeispiel 1 und 3 zeigen, dass wenn die Anzahl $N_c$ der Erhebungen $h_c$ ausgedrückt mit Hilfe der Parameter F und G außerhalb (oberhalb) des beanspruchten Bereichs, jedoch der Messwert für die Gasströmung im Rauhigkeitsprofil im beanspruchten Bereich liegen, die elektromagnetischen Eigenschaften den Anforderungen nicht genügen.

Vergleichsbeispiel 2 und 4 zeigen, dass wenn die Anzahl $N_c$ der Erhebungen $h_c$ ausgedrückt mit Hilfe der Parameter F und G im beanspruchten Bereich, jedoch der Messwert für die Gasströmung im Rauhigkeitsprofil außerhalb des beanspruchten Bereichs liegen, die elektromagnetischen Eigenschaften den Anforderungen ebenso nicht genügen.

Die Vergleichsbeispiele 2 und 4 zeigen weiterhin, dass der Einfluß der Schicht A, beschrieben durch die Anzahl $N_c$ der Erhebungen $h_a$ ausgedrückt mit Hilfe der Parameter A und B, auf die elektromagnetischen Eigenschaften für Magnetbänder ohne Rückseitenbeschichtung überraschender weise untergeordnet ist.

## Patentansprüche

1. Biaxial orientierte, koextrudierte, mindestens dreischichte Polyesterfolie, deren beide Oberfläche durch Deckschichten A und C gebildet werden, wobei sich zwischen diesen Deckschichten eine Basisschicht B befindet, dadurch gekennzeichnet, dass die Deckschicht A

   - eine Anzahl von Erhebungen/Vorsprüngen $N_a$ pro 0,36 mm$^2$ aufweist, die mit ihren jeweiligen Höhen $h_a$ in fol- gender Beziehung steht:

$$A_1 \cdot e^{-B_1 \cdot h_a} \leq N_a \leq A_2 \cdot e^{-B_2 \cdot h_a} \tag{1}$$

   mit

   $A_1 = 300,$     $A_2 = 7000$
   $B_1 = 7,0,$     $B_2 = 8,0$
   $0,01 \ \mu m \leq h_a \leq 1,0 \ \mu m$

   und die Deckschicht C
   - einen $R_a$-Wert aufweist, der größer ist als der, der Deckschicht A und eine
   - Anzahl von Erhebungen/Vorsprüngen $N_c$ pro 0,36 mm$^2$ aufweist, die mit ihren jeweiligen Höhen $h_c$ in folgender Beziehung steht:

$$F_1 \cdot e^{-G_1 \cdot h_c} \leq N_a \leq F_2 \cdot e^{-G_2 \cdot h_c} \tag{3}$$

   mit

   $F_1 = 8000,$     $F_2 = 12000$
   $G_1 = 8,0,$     $G2 = 12,0$
   $0,01 \ \mu m \leq h_c \leq 1,0 \ \mu m$

und die Gasströmung im Rauhigkeitsprofil der Oberfläche aus Deckschicht C >550 sec liegt.

2. Folie nach Anspruch 1, dadurch gekennzeichnet, dass in der Deckschicht C Partikelsysteme verwendet werden, die aus zwei unterschiedlichen Partikeldurchmessern ($d_{50}$) im Bereich von 0,3 - 0,6 µm zusammengesetzt sind und die jeweils in einer partikelkonzentration von 0,1 - 1 Gew.-% (bezogen auf das Gewicht der Deckschicht enthalten sind.

3. Folie nach Anspruch 1 oder 2, dadurch gekennzeichnet, dass die spezifische Trübung der Folie ≤0,4 % / µm ist.

4. Folie nach einem der Ansprüche 1 bis 3, dadurch gekennzeichnet, dass die Deckschichten A Partikel enthält.

5. Folie nach Anspruch 4, dadurch gekennzeichnet, dass die Deckschicht A Partikel in einer Konzentration von 500 ppm bis 10.000 ppm, bezogen auf das Gewicht der Deckschicht, enthält.

6. Folie nach Anspruch 4 oder 5, dadurch gekennzeichnet, dass die mittlere Korngröße $d_{50}$ der Partikel in der Deckschicht A zwischen 0,2 µm und 2,0 µm liegt.

7. Folie nach einem oder mehreren der Ansprüche 2 bis 6, dadurch gekennzeichnet, dass die durch die Gleichungen (1) und (3) ausgedrückten unterschiedlichen Topographien der Deckschichten A und C durch Variation der Konzentration der Partikel/Partikelsysteme in den Deckschichten A und C und/oder durch verschiedene, mittlere Korngrößen $d_{50}$ der Partikel/Partikelsysteme in den Deckschichten A und C eingestellt werden.

8. Folie nach einem oder mehreren der Ansprüche 1 bis 7, dadurch gekennzeichnet, dass die Deckschichtdicken der Deckschichten A und C unabhängig voneinander gleich oder verschieden sind und zwischen 0,3 bis 2,5 µm liegen.

9. Folie nach einem oder mehreren der Ansprüche 1 bis 8, dadurch gekennzeichnet, dass die Gesamtfoliendicke 5 µm bis 40 µm beträgt.

10. Folie nach einem oder mehreren der Ansprüche 1 bis 9, dadurch gekennzeichnet, dass die Basisschicht B Folienregenerat enthält.

11. Verfahren zur Herstellung einer biaxial orientierten, koextrudierten, mindestens dreischichtigen Polyesterfolie gemäß Anspruch 1, bei dem Polyesterschmelzen entsprechend den Zusammensetzungen der Deck- und Basisschichten einer Mehrschichtdüse zugeführt werden, aus dieser auf eine Abkühlwalze extrudiert werden und die so erhaltene Vorfolie anschließend biaxial verstreckt und hitzefixiert wird, wobei die Deckschicht A

- eine Anzahl von Erhebungen/Vorsprüngen $N_a$ pro 0,36 mm$^2$ aufweist, die mit ihren jeweiligen Höhen $h_a$ in folgender Beziehung steht:

$$A_1 \cdot e^{-B_1 \cdot h_a} \le N_a \le A_2 \cdot e^{-B_2 \cdot h_a} \tag{1}$$

mit

$A_1 = 300,$      $A_2 = 7000$
$B_1 = 7,0,$      $B_2 = 8,0$
$0,01 \, \mu m \le h_a \le 1,0 \, \mu m$

und die Deckschicht C
- einen $R_a$-Wert aufweist, der großer ist als der der Deckschicht A und eine
- Anzahl von Erhebungen/Vorsprüngen $N_c$ pro 0,36 mm$^2$ aufweist, die mit ihren jeweiligen Höhen $h_c$ in folgender Beziehung steht:

$$F_1 \cdot e^{-G_1 \cdot h_c} \le N_a \le F_2 \cdot e^{-G_2 \cdot h_c} \tag{3}$$

mit

$F_1 = 8000,$ $F_2 = 12000$
$G_1 = 8,0,$ $G_2 = 12,0$
$0,01\ \text{mm} \geq h_c \geq 1,00\ \text{mm}$

und die Gesamtströmung im Rauhigkeitsprofil der Oberfläche aus Deckschicht C > 550 sec liegt.

12. Magnetisches Aufzeichnungsmedium, enthaltend eine Folie nach Anspruch 1 und eine auf einer Oberfläche der Folie aufgebrachten magnetisierbaren Schicht.

13. Magnetisches Aufzeichnungsmedium nach Anspruch 12, dadurch gekennzeichnet, dass die magnetisierbare Schicht auf die Deckschicht A aufgebracht ist.

14. Verwendung einer Folie nach Anspruch 1 als Magnetband.